## Europäisches Patentamt
## European Patent Office
## Office européen des brevets

(19)

(11) Veröffentlichungsnummer: **0 215 804**

**B1**

(12)

# EUROPÄISCHE PATENTSCHRIFT

(45) Veröffentlichungstag der Patentschrift:
02.08.89

(21) Anmeldenummer: 86900600.7

(22) Anmeldetag: 07.01.86

(86) Internationale Anmeldenummer:
PCT/DE 86/00003

(87) Internationale Veröffentlichungsnummer:
WO 86/04202 (17.07.86 Gazette 86/17)

(51) Int. Cl.⁴: **H 04 J 15/00**, G 02 B 6/34,
G 02 B 6/12

(54) **MULDEX FÜR OPTISCHE ÜBERTRAGUNGSSYSTEME.**

(30) Priorität: 07.01.85 DE 3500532

(43) Veröffentlichungstag der Anmeldung:
01.04.87 Patentblatt 87/14

(45) Bekanntmachung des Hinweises auf die Patenterteilung:
02.08.89 Patentblatt 89/31

(84) Benannte Vertragsstaaten:
AT BE CH DE FR GB IT LI LU NL SE

(56) Entgegenhaltungen:
EP-A-0 118 577

**Patents Abstracts of Japan, Band 7, Nr. 239, (E-206)
(1384) 25. Oktober 1983 & JP-A-58129848**

(73) Patentinhaber: **Siemens Aktiengesellschaft, Berlin
und München Wittelsbacherplatz 2, D-8000
München 2 (DE)**

(72) Erfinder: **NOLTING, Hans-Peter, Ringslebenstrasse
68, D-1000 Berlin 47 (DE)**
Erfinder: **HOFFMANN, Detlef, Lüdtgeweg 14,
D-1000 Berlin 10 (DE)**
Erfinder: **SCHLICHTING, Martin,
Grossbeerenstrasse 29, D-1000 Berlin 61 (DE)**
Erfinder: **MÄRZ, Reinhard, Hofangerstrasse 79,
D-8000 München 83 (DE)**

EP 0 215 804 B1

## Beschreibung

### Technisches Gebiet, auf das sich die Erfindung bezieht:

Die Erfindung bezieht sich auf einen Multiplexer/Demultiplexer - MULDEX - für optische Übertragungssysteme mit Mehrfachausnutzung des Wellenlängenbereichs für Kanäle mit einmodigen Träger-Lichtwellen, wobei zur Ein- und Auskopplung in planarer Technologie aufgebaute optische Filter vorgesehen sind, die nicht identische Wellenleiter mit kodirektionaler ortsabhängiger Kopplung aufweisen.

### Technologischer Hintergrund:

In der optischen Nachrichtentechnik gewinnen Monomodesysteme zunehmend an Bedeutung. Die geringe Dämpfung der als Übertragungsmedium verwendbaren Monomodefasern im Wellenlängenbereich zwischen etwa 1,3 μm und 1,6 μm gestattet eine Mehrfachausnutzung für Kanäle mit einmodigen Lichtwellen unterschiedlicher Wellenlängen als Träger.

Die Kanalbelegungsdichte hängt dabei im wesentlichen von den Voraussetzungen ab, die von den Komponenten eines optischen Übertragungssystems auf der Sende- und der Empfangsseite vorgegeben werden. Für den Inhalt eines Kanals wird, selbst bei Breitbanddiensten, nur eine Bandbreite von weniger als 300 MHz bzw. eine Bitrate von beispielsweise 300 Mbit/s benötigt. Dies entspricht bei einer Wellenlänge zwischen 1,3 μm und 1,6 μm für die Träger-Lichtwelle einer optischen Bandbreite von etwa 1 pm bis 3 pm. Entsprechend schmale und steile Durchlaßkurven von optischen Filtern sind derzeit nicht realisierbar. Dies ist jedoch auch solange nicht unbedingt erforderlich, wie verfügbare Monomode-Laser nicht ebenfalls entsprechend stabil und spektral rein sind. Als realistische Forderungen für optische Übertragungssysteme mit Wellenlängenmultiplex und einmodigen Träger-Lichtwellen können wohl für absehbare Zeit Kanalabstände von etwa 30 nm und dementsprechende Bandbreiten optischer Filter von etwa 15 nm angenommen werden. Danach lassen sich dann über eine Monomodefaser im oben genannten dämpfungsarmen Wellenlängenbereich ca. 10 Kanäle im Wellenlängenmultiplex, beispielsweise je 5 Kanäle in der Hin- und in der Rückrichtung, übertragen. Das heißt, auf der Sendeseite und auf der Empfangsseite werden Multiplexer /Demultiplexer benötigt, die jeweils einen optischen Kanal zu z. B. vier anderen hinzuzufügen bzw. einen von vier anderen zu selektieren gestatten.

Für optische Übertragungsysteme werden auf der Sende- und der Empfangsseite, gegebenenfalls auch für Zwischenverstärker und Vermittlungseinrichtungen, auch elektronische Schaltungen benötigt. Obwohl durchaus die Möglichkeit besteht, in unterschiedlichen planaren Technologien hergestellte optische und elektronische Komponenten miteinander zu verknüpfen, wird angestrebt, derartige Komponenten in einer einheitlichen Technologie, letztlich mit dem Ziel einer Integration von optischen und elektronischen Bauelementen auf einem gemeinsamen Substrat, herzustellen. Dafür kommt nur ein Materialsystem in Betracht, das als direkter Halbleiter auch bestimmte optische Eigenschaften, z. B. Transparenz, Lumineszenz, Lichtabsorption, besitzt.

### Zugrundeliegender Stand der Technik:

Die aus der technisch/wissenschaftlichen Literatur bekannten Arbeiten über wellenlängenselektive Filter für MULDEX-Einrichtungen befassen sich überwiegend mit Komponenten auf Lithiumniobat-Basis. Bei diesem, elektrisch isolierenden Material besteht übrigens die einfache Möglichkeit, z. B. durch Diffusion von Titan, optisch nicht identische Wellenleiter zu erzeugen. Aus elektrischem Halbleitermaterial, z. B. Galliumarsenid /Galliumaluminiumarsenid labormäßig aufgebaute, elektrisch steuerbare optische Komponenten sind hingegen bisher nicht als wellenlängenselektive Filter realisiert worden. Die nachfolgende Tabelle gibt einen knappen Überblick hierzu.

### Tabelle

| Literatur-stelle | Material | Funktions-weise | optische Bandbreite (ca.) | Nennwellen-länge $\lambda_o$ (ca.) | abstimmbare Parameter |
|---|---|---|---|---|---|
| A1 | LiNbO$_3$ | kodirektionaler Richtkoppler | 200 nm | 0,6 μm | $\lambda_o$ |
| A2 | InGaAsP-InP | kodirektionaler Koppler | 2 nm | 1,0 μm bis 1,6 μm | $\lambda_o$ |
| B | LiNbO$_3$ | TE/TM-Konverter | 7 nm | 0,6 μm | I* |

| C | GaAs | Bragg-Gitter | | | |
| | LiNbO$_3$ | Reflektoren | 0,2 nm | 0,8 μm | - |
| D | GaAs/GaAlAs | POLAM | (200 nm) | 1,064 μm | (I*) |
| E | (LiNbO$_3$) | kodirektionaler | (200 nm) | (0,6 μm) | - |
| | | Richtkoppler | | | |

Anmerkung: Die Angaben in Klammern (...) sind angenommene Beispiele.

A1: "Applied Physics Letters" 33(2), 1978, Seiten 161 bis 163
A2: "International Conference on Thin Solid Films", Stockhom Aug. 1984
- S. Lindgren, B. Broberg, M. Öberg, H. Jiang: Narrow-Bandwidth Optical Waveguide Filters in InGaAsP-InP
B: "Applied Physics Letters" 39(2), 1981, Seiten 131 bis 134
C: "Applied Optics" 19 (16), 1980, Seiten 2848 bis 2855
D: "IEEE Journal of Quantum Electronics" QE-18 (4), 1982, Seiten 763 bis 766
E: "IEEE Journal of Quantum Electronics" QE-14 (11), 1978, Seiten 843 bis 847

## Technische Aufgabe und Lösung sowie Vorteile der Erfindung

Der Erfindung liegt die Aufgabe zugrunde, insbesondere für MULDEX-Einrichtungen der eingangs genannten Art im Rahmen der erwähnten technischen Anforderungen wellenlängenselektive Filter zu schaffen, die auf dem Prinzip eines passiven Richtkopplers mit kodirektionaler Kopplung zwischen den Wellenleitern beruhen.

Außerdem soll es möglich sein, mehrere oder alle Filterkomponenten, die an einem Sende- und/oder Empfangsort zum Ein- bzw. Auskoppeln von Träger-Lichtwellen benötigt werden, in monolithischer Integration zusammenzufassen. Dazu sind Strukturen vorzusehen, die räumlich eng. gedrängt und zudem in wenigen, jeweils einheitlichen Prozeßschritten herstellbar sind.

Weiterhin soll im Hinblick auf die Integrierbarkeit von optischen und elektronischen Komponenten besonderes Gewicht darauf gelegt werden, daß sich derartige Strukturen auch in Halbleitermaterial realisieren lassen.

Ausgehend von dem aus der Literaturstelle "E" bekannten Richtkoppler-Filter mit ortsabhängiger Kopplung zwischen den betreffenden Wellenleitern ist die erfindungsgemäße Lösung dieser Aufgabe gekennzeichnet durch Filterkomponenten, bei denen ungleich ausgebildete Wellenleiter über sich periodisch wiederholende Sektionen, bestehend aus Koppelstrecken und die optische Kopplung reduzierende Strecken, diskontinuierlich miteinander verkoppelt sind und - entsprechend den wellenleitenden Eigenschaften der beiden Wellenleiter - für eine vorgegebene Nennwellenlänge die Periodenlänge der Sektion und für eine vorgegebene Durchlaßbreite des Filters die Anzahl der Sektionen bestimmbar sind.

Bevorzugte Ausführungsformen der Erfindung weisen außerdem noch folgende Merkmale auf.

- Jede der Filterkomponenten besteht aus mindestens einem Paar von Wellenleitern, und Strecken mit reduzierter optischer Kopplung zwischen den jeweiligen Wellenleitern eines Paares sind als Ätzgräben ausgebildet;
- die Tiefe der Ätzgräben kann sich über die gesamte Dicke der wellenleitenden Schicht erstrecken oder aber zu den Enden des Kopplungsbereiches hin abnehmen;
- weiterhin kann bei mindestens einem Paar von Wellenleitern einer der Wellenleiter mit einer Krümmung ausgebildet sein und zum Zentrum der Verkopplung hin den geringsten Abstand zum anderen Wellenleiter des Paares aufweisen.

Eine weitere Gruppe bevorzugter Ausführungsformen der Erfindung, bei der ebenfalls jede der Filterkomponenten aus mindestens einem Paar von Wellenleitern besteht, ist dadurch gekennzeichnet, daß

- mindestens einer der Wellenleiter schlangenlinienförmig ausgebildet ist, so daß die Koppelstrecken im Bereich des geringeren gegenseitigen Abstandes und die Strecken mit weitestgehend reduzierter optischer Kopplung im Bereich des größeren gegenseitigen Abstandes liegen.

Auch bei dieser Gruppe von bevorzugten Ausführungsformen der Erfindung kann

- weiterhin mindestens einer der schlangenlinienförmig ausgebildeten Wellenleiter eine gekrümmte Schwerpunktlinie aufweisen, die zum Zentrum der Verkopplung hin ihren geringsten Abstand gegenüber dem anderen Weilenleiter bzw. dessen gekrümmter Schwerpunktlinie besitzt.

Für alle Ausführungsformen der Erfindung besteht die Möglichkeit

- einer Ausbildung der Filterstrukturen in Glas als Substratmaterial; hierbei kann zudem

3

- eine Deckschicht über den Filterstrukturen vorgesehen sein, die aus einem Glasmaterial besteht, dessen optische Brechzahl der des Substratmaterials entspricht.

Vorteilhaft ist dabei die besonders geringe Dämpfung sowie der geringe Preis bei Glas. Die Bedeckung, d.h. Material mit zumindest ähnlichen Brechzahlen ober- und unterhalb der wellenleitenden Schicht, führt zu einer passiven Polarisationsunabhängigkeit. Sollen die Filterkomponenten z. B. elektrisch steuerbar sein, empfiehlt sich

- eine Ausbildung der Filterstrukturen in elektro-optischem, dielektrischem Material, insbesondere Lithiumniobat (LiNbO$_3$) oder Lithiumtantalat (LiTaO$_3$).

Wird auch hierbei die Polarisationsunabhängigkeit gewünscht, kann

- elektro-optisches, dielektrisches Material, insbesondere Lithiumniobat oder Lithiumtantalat für die Ausbildung der Filterstrukturen sowie für eine Deckschicht über den Filterstrukturen dienen.

Noch weitergehende Möglichkeiten bietet bei Ausführungsformen der Erfindung

- eine Ausbildung der Filterstrukturen in III-V-Halbleitermaterial, insbesondere Mischkristallmaterial der Zusammensetzungen Galliumaluminiumarsenid/Galliumarsenid (GaAlAs/GaAs) oder Indiumgalliumarsenidphosphid/Indiumphosohid (InGaAsP/Inp).

Dieses Materialsystem gestattet nämlich auch die Herstellung von optisch aktiven Elementen, z. B. elektrooptischen Wandlern (Laser) oder opto-elektrischen Wandlern (Photo-Dioden). Auch bei diesen besonders bevorzugten Ausführungsformen der Erfindung empfiehlt sich

- III-V-Halbleitermaterial, insbesondere Mischkristallmaterial der Zusammensetzungen Galliumaluminiumarsenid/Galliumarsenid oder Indiumgalliumarsenidphosphid/Indiumphosphid für die Ausbildung der Filterstrukturen sowie für eine Deckschicht über den Filterstrukturen.

Bei Ausführungsformen der Erfindung aus dielektrischem oder aus halbleitendem Material können zur elektrischen Steuerung noch

- Elektroden über gekoppelten Wellenleitern angebracht sein.

Weiterhin bevorzugt ist

- eine monolithische Integration mehrerer, vorzugsweise aller Filterstrukturen, die an einem Sende- und/oder Empfangsort benötigt werden, als integrierte optische Schaltung (IOC),

und schließlich - sofern halbleitendes Material verwendet wird

- eine monolithische Integration mehrerer, vorzugsweise aller Filterstrukturen, die an einem Sende- und/oder Empfangsort benötigt werden, einschließlich zugehöriger elektronischer Schaltkreise, als integrierte optisch/elektronische Schaltung (IOEC).

Die wesentlichen Vorzüge und Unterschiede der erfidungsgemäßen Lösung gegenüber den oben tabellarisch erwähnten bekannten Maßnahmen werden nachfolgend näher erläutert:

- Bei einem Richtkoppler mit asymmetrischen Wellenleitern gemäß der Erfindung sind sowohl die Fortpflanzungskonstanten $\beta_A$ und $\beta_B$ als auch die Dispersionen ungleich. Dadurch wird ein großer Bereich möglicher Wellenleiterpaarungen zugelassen. Für Streifenwellenleiter (s. "A1") in LiNbO$_3$, die hingegen so dimensioniert sein müssen, daß die Phasengeschwindigkeiten für eine vorgegebene Wellenlänge gleich sind und die Dispersion der Wellenleiter die Durchlaßbreite des Filters bestimmt, wurden hierfür Werte von einigen 100 nm erreicht. Bestehen die beiden Wellenleiter aus demselben quaternären Material liegt die Durchlaßbreite ebenfalls in dieser Größenordnung. Nur bei Wellenleitern mit unterschiedlichen quaternären Schichten, z. B. InGaAsP-InP, lassen sich Durchlaßbreiten erreichen, die um zwei Größenordnungen schmaler sind, z. B. 2 nm. Unterschiedliches Material für ein Wellenleiterpaar erschwert jedoch die Herstellung erheblich.

- TE/TM-Modenkonverter (vgl. Literaturstelle "B") können als $\Delta\kappa$-Koppler bezeichnet werden und zeigen eine starke Dispersion, wurden aber bisher nur in LiNbO$_3$ und GaAlAs/GaAs (vgl. Literaturstelle "D"), im zuletzt genannten Fall als Polarisationsmodulator, realisiert. Dabei wird über den elektrooptischen Effekt die Polarisation geändert. Es handelt sich bei diesem Typ also um aktive Komponenten. Soweit übrigens bei LiNbO$_3$-Komponenten eine Durchlaßbreite im nm-Bereich erreicht wurde, ist dies nicht etwa auf unterschiedliche physikalische Prinzipien, sondern auf die hohe Doppelbrechung des verwendeten LiNbO$_3$

zurückzuführen. Die sich dabei zeigende sehr große Phasenfehlanpassung für TE- und TM-Wellen, muß durch eine periodische Elektroden-Anordnung für ein treibendes elektrisches Feld für eine vorgegebene Wellenlänge kompensiert werden. Ein Vorteil dieser Maßnahmen besteht allerdings darin, daß die Koppelkonstante proportional zum elektrischen Feld ist und durch die angelegte Spannung auf die richtige Bauelementlänge abgestimmt werden kann.

- Eine theoretisch untersuchte Struktur eines asymmetrischen Richtkopplers mit Rückwärtsstreuung durch entsprechend einer vorgegebenen Wellenlänge dimensionierte Bragg-Gitter im Bereich zwischen zwei verkoppelten Wellenleitern (vgl. Literaturstelle "C") führt als Filter zu Durchlaßbreiten von einigen Å (1 Å = 0,1 nm). Die Periodenlänge, die dabei erforderlich ist, liegt im 100 nm-Bereich und dürfte bei der Herstellung eine Genauigkeit von ca. ± 0,01 nm erfordern. Dies liegt weit außerhalb der Grenzen, die mit herkömmlichen Lithographie-Technologien erreichbar sind.

Die erfindungsgemäße Filterstruktur kann als $\Delta\kappa$-Koppler bezeichnet werden. In jeweils zwei kodirektional gekoppelten ungleichen Wellenleitern sind dabei die Phasengeschwindigkeiten und die Dispersionen niemals identisch. Eine Phasenanpassung, ähnlich dem $\Delta\kappa$-Koppler, jedoch durch periodische Wiederholung von Streckenabschnitten mit und ohne (bzw. mit reduzierter) Kopplung, wird für eine vorgegebene Wellenlänge herbeigeführt. Dabei bewirken beispielsweise optisch isolierende Ätzgräben oder bei schlangenlinienförmig ausgebildeten Wellenleitern die Abschnitte mit dem größeren gegenseitigen Abstand die reduzierte Kopplung.

Beim bekannten $\Delta\kappa$-Koppler wird die Kopplung periodisch zwischen $+\kappa$ und $-\kappa$ variiert, beim $\Delta\kappa/2$-Koppler gemäß der Erfindung hingegen zwischen $+\kappa$ und 0. Die negativen $\kappa$-Werte bei der vorbekannten Lösung sind physikalisch nur durch äußere Maßnahmen, z. B. elektrische Felder, also im Rahmen einer aktiven Komponente zu erreichen, die erfindungsgemäße Lösung ist als passive Komponente realisierbar. Die Filtereigenschaften sind bei beiden Lösungen etwa die gleichen, die erfindungsgemäße Lösung benötigt allerdings die doppelte Länge.

Normalerweise ist zwischen zwei asymmetrischen oder nicht identischen Wellenleitern trotz Kopplung kein vollständiger Energieaustausch möglich (ähnlich wie zwischen zwei ungleichen Pendeln). Für die Erfindung ist diese Tatsache von ausschlaggebender Bedeutung, denn dadurch, daß eine Kopplung, soweit diese erwünscht ist, zugelassen, und soweit sie nicht erwünscht ist, unterbunden wird, gelangt man sukzessiv von Sektion zu Sektion näher zum Ziel (ähnlich der Aufladung eines Kondensators mit Gleichrichtung und Unterdrückung jeder zweiten Halbwelle eines speisenden Wechselstromes).

**Bester Weg zur Ausführung der Erfindung:**

Die Dimensionierung der einzelnen Filterkomponenten bei Ausführungsformen der Erfindung erfolgt zweckmäßig mit Hilfe eines Rechnerprogramms. (Über die mathematisch-physikalischen Berechnungsgrundlagen ist inzwischen detaillierter an anderer Stelle berichtet worden: Nolting, Hoffmann, Schlichting: "Integrated Optical Wavelength Multiplexer/Demultiplexer for Optical Communication", Proceedings of the 3rd European Conference on Integrated Optics, Berlin, 6. bis 8. Mai 1985, S. 215 - 220.)

Dabei ist wie folgt vorzugehen:

Für eine vorgegebene Nennwellenlänge und das zu verwendende Material werden zunächst die Querschnittsabmessungen für die beiden Wellenleiter ausgewählt. Damit lassen sich die betreffenden Phasenkonstanten $\beta_A$ und $\beta_B$ bestimmen. Für die Phasenfehlanpassung gilt dabei:

$$\delta_o = \tfrac{1}{2}\,(\beta_A(\lambda_o) - \beta_B(\lambda_o))$$

Die ungehinderte, vom Abstand der beiden Wellenleiter exponentiell abhängige Kopplung liegt in der Praxis z. B. bei $\kappa_o = 0,8$ rad pro mm. Mit der bekannten Beziehung für die Koppellänge (Beatlänge)

$$lc = \frac{\pi}{2\sqrt{\delta o^2 + \kappa o^2}}$$

(für $\delta o = 0$ gilt: $lc = \pi/2 \cdot \kappa o$)

sowie der Formel für Strecken ohne (bzw. mit stark reduzierter) Kopplung
$$lo = lc \cdot \frac{\sqrt{1 + ro^2}}{ro}\; lc \text{ für } ro \gg 1$$

wobei $ro = \delta o/\kappa o$ gilt,

ergibt sich die Periodenlänge $lc + lo$ einer Sektion S.

Für eine vorgegebene Breite der Durchlaßkurve läßt sich sodann die Anzahl N der Sektionen bestimmen. Da N eine ganze Zahl sein muß, kann bei einem geringfügig abweichenden berechneten Wert eine Auf- oder Abrundung erfolgen, anderenfalls ist die Dimensionierung mit geänderten $\kappa$- und/oder $\delta$-Werten zu optimieren.

Alle benötigten Zahlenwerte bzw. Berechnungsgrundlagen werden zweckmäßig in Tabellen, für einen Rechner lesbar, abgelegt und können durch Meßergebnisse usw. aktualisiert und optimiert werden.

5



EP 0 215 804 B1

Zur Dimensionierung einer MULDEX-Einrichtung können durchaus für einen gemeinsamen durchgehenden Wellenleiter ein $\beta_A$ sowie für die je Filterkomponente angekoppelten Wellenleiter jeweils dieselben $\beta_B$, d.h. insbesondere konstante Querschnittsabmessungen vorgegeben werden. Für die betreffenden Nennwellenlängen ergeben sich dann unterschiedliche Periodenlängen der zugehörigen Sektionen S, auch geringfügig unterschiedliche Durchlaßbreiten der Filter. Insoweit ist es angebracht, für die Filterbreiten Maximal- und Minimalwerte vorzugeben.

Besonders vorteilhafte Ausführungsformen der Erfindung sind in den Zeichnungen schematisch dargestellt.

**Kurzbeschreibung der Abbildungen:**

Es zeigen: •

Fig. 1: ein Blockschaltbild einer aus Filterkomponenten aufgebauten MULDEX-Einrichtung,
Fig. 2: einen bidirektionalen Wellenleiter-Richtkoppler als Grundform für ein wellenlängenselektives Filter,
Fig. 3: eine Durchlaßkurve eines Richtkoppler-Filters gemäß Fig. 2,
Fig. 4: ein $\Delta\kappa/2$-Richtkoppler-Filter mit Ätzgräben zur diskontinuierlichen Kopplung zwischen den Wellenleitern,
Fig. 5: einen Querschnitt durch ein Filter gemäß Fig. 4, im Detail,
Fig. 6: einen Längsschnitt durch ein Filter gemäß Fig. 4, entlang des Koppelbereichs zwischen den beiden Wellenleitern,
Fig. 7: eine Durchlaßkurve, ähnlich Fig. 3, und eine dazu durch Abstimmung des Filters verschobene Durchlaßkurve,
Fig. 8 und 9: berechnete Durchlaßbreiten und Baulängen für Richtkoppler-Filter,
Fig. 10: ein $\Delta\kappa/2$ Richtkoppler-Filter mit schlangenlinienförmig ausgebildeten, diskontinuierlich miteinander verkoppelten planaren Wellenleitern,
Fig. 11: Durchlaßkurven eines Filters gemäß Fig. 10, mit und ohne Taperung schlangenlinienförmig ausgebildeter Wellenleiter,
Fig. 12: Durchlaßkurven für TE- und TM-Moden eines polarisationsunabhängigen Filters gemäß Fig. 10,
Fig. 13 bis 28: mehrere Konfigurationen für wellenlängenselektive Wellenleiter-Filterkomponenten, mit Detaildarstellungen - Fig. 16, 20, 24 und 28 - für die einzelnen Konfigurationen
und Fig. 29: ein Bauelement mit monolithisch integrierten optischen und elektronischen Komponenten.

**Beschreibung der zeichnerisch dargestellten Ausführungsformen:**

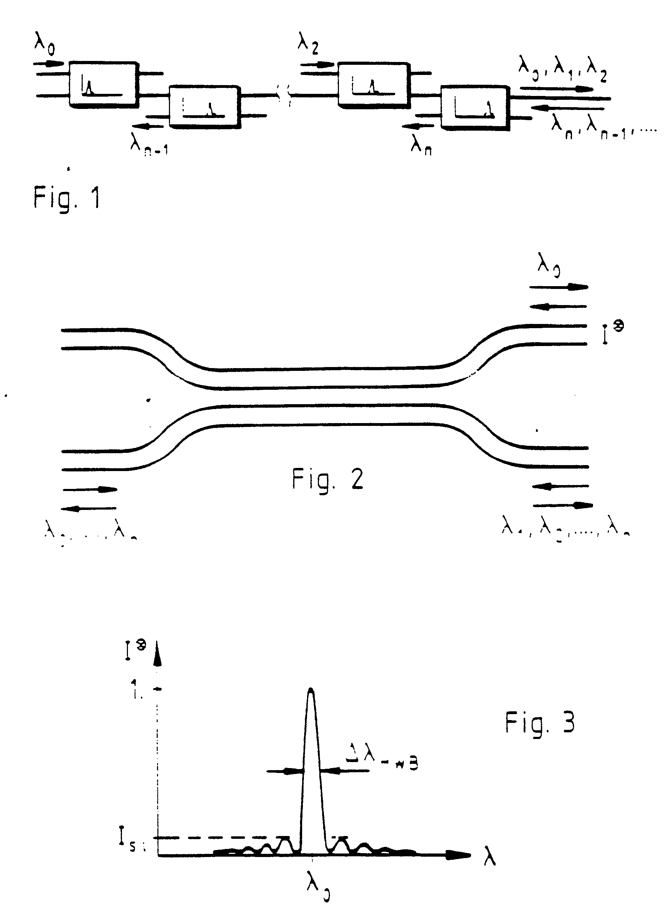

Ein Multiplexer/Demultiplexer gemäß Fig. 1 für ein optisches Übertragungssystem hat die Aufgabe, Kanäle mit einmodigen Lichtwellenträgern unterschiedlicher Nennwellenlängen $\lambda_0, \lambda_1, \ldots \lambda_n$ zusammenzufügen bzw. voneinander zu trennen. Bei einer bidirektionalen Übertragung sind beide Vorgänge, also das Multiplexen und das Demultiplexen, an beiden Enden einer Übertragungsstrecke durchzuführen. Dies geschieht hier in einer gemeinsamen Einrichtung, so daß diese als MULDEX (Multiplexer/Demultiplexer) bezeichnet werden kann.

Die Wellenlängen $\lambda$ der einzelnen Träger liegen im Bereich zwischen etwa 1,3 µm und 1,6 µm, ihr gegenseitiger Abstand ist ca. 30 nm oder größer. Geringere Kanalabstände sind diskutabel, wenn entsprechend reine und stabile Monomode-Laser zur Verfügung stehen.

Für eine saubere Trennung der Kanäle voneinander, d.h. insbesondere mit ausreichender Übersprechdämpfung, mittels optischer Filter müssen deren Durchlaßkurven dem Kanalabstand entsprechend schmal und steil sein. Wird für das Nutzsignal z. B. eine maximale Dämpfung im Durchlaßbereich von 3 dB zugelassen, können Bandbreite und Steilheit der Durchlaßkurve in der Praxis ausreichend genau durch die sogenannte Halbwertsbreite, hier $\Delta\lambda_{HWB}$, angegeben werden (vgl. auch Fig. 2 und 3).

Derartige optische Filter sind also wellenlängenselektiv auszubilden. Bei den Ausführungsformen der Erfindung sind dazu in planarer Technologie aufgebaute Richtkoppler-Filter vorgesehen, die kodirektionale und ortsabhängige Kopplung zwischen nicht identischen Wellenleitern aufweisen.

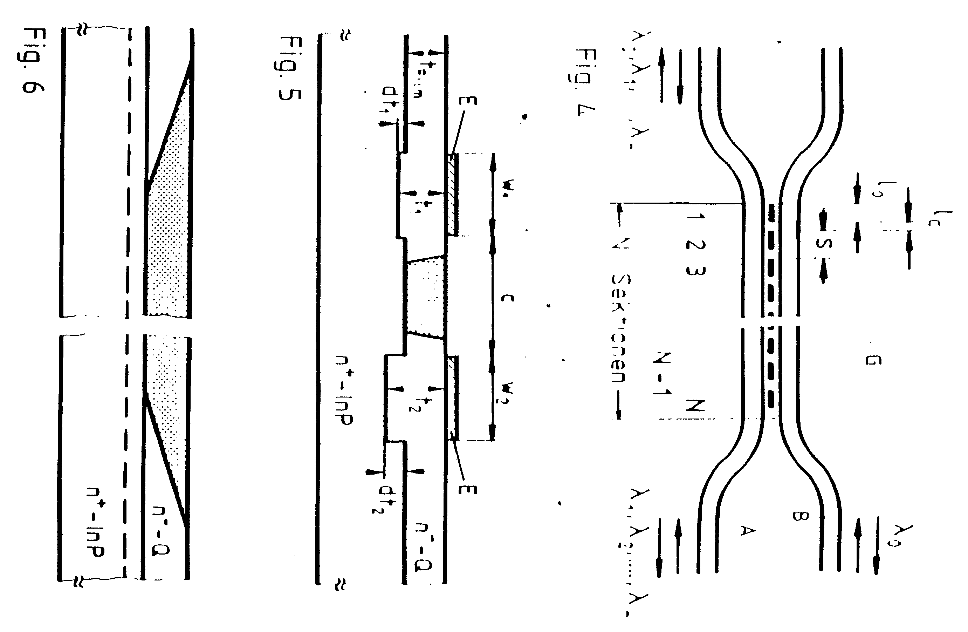

Die Fig. 4, 5 und 6 zeigen den Aufbau neuartiger Richtkoppler-Filter, bei denen eine diskontinuierliche Kopplung zwischen den beiden unterschiedlichen Wellenleitern A und B über N Sektionen S herbeigeführt wird, die sich periodisch wiederholen und aus Strecken lc mit und lo ohne (bzw. mit stark reduzierter) Kopplung bestehen. Die reduzierte Kopplung wird hierbei mittels Ätzgräben G erzielt, die eine optische Isolierung zwischen den Wellenleitern A, B bewirken.

Für eine bestimmte Wellenlänge ergibt sich eine zugehörige Periodenlänge, die bei den Ausführungsformen der Erfindung einer Sektion S entspricht. Dabei hat sich gezeigt, daß die Strecken lo und lc nahezu gleich lang sein können. Die Durchlaßbreite des Filters hängt von der Anzahl N der Sektionen S ab. Etwa sieben oder mehr derartige Sektionen S sind vorzusehen.

Die einzelnen, zu einer MULDEX-Einrichtung gehörigen Filter werden z. B. auf einen InP-Substrat mit einer quaternären Schicht Q aufgebaut. Die Querschnittsflächen der beiden Wellenleiter sind nicht gleich, d.h. (vgl.

6

Fig. 5), daß z. B. zumindest die Tiefen $t_1$ und $t_2$ ungleich sind. Die Wellenleiter haben die Breite $W_1$ bzw. $W_2$ und den gegenseitigen Abstand c. Den in Fig. 4 eingezeichneten Ätzgräben G entsprechen in den Fig. 5 und 6 die punktierten Flächen in der Q-Schicht. Fig. 6 zeigt dabei zu den Enden der Ätzgräben hin abnehmende Tiefe.

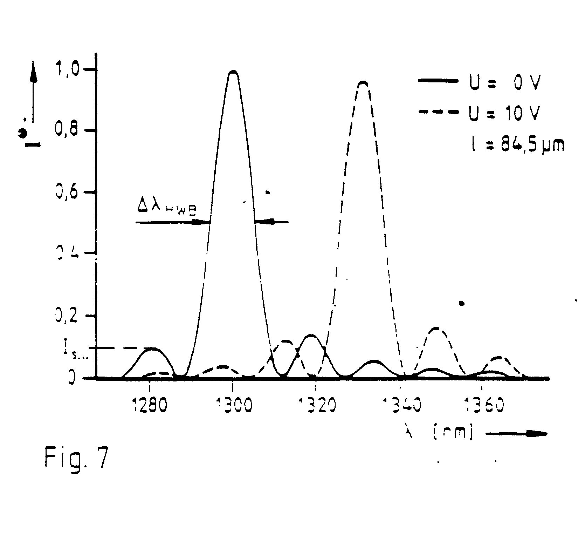

Über den beiden Wellenleitern (vgl. Fig. 5) können noch Elektroden E für pn-Übergänge, MIS- oder Schottky-Kontakte angebracht sein. Eine entsprechende Gegenelektrode befindet sich üblicher Weise an der Unterseite des Substrats und ist hier nicht dargestellt. Elektrische Felder, die sich durch Anlegen einer Spannung an eine Elektrode E im Bereich eines Wellenleiters ausbilden, bewirken dort über den elektro-optischen Effekt eine Änderung der wellenleitenden Eigenschaften. Dies ist gleichbedeutend mit einer Verstimmung des an sich passiven Filters. Die Fig. 7 zeigt die Verschiebung der Durchlaßkurve eines derartigen Filters, das damit z. B. entsprechend der Drift eines Lasers nachgeführt werden kann.

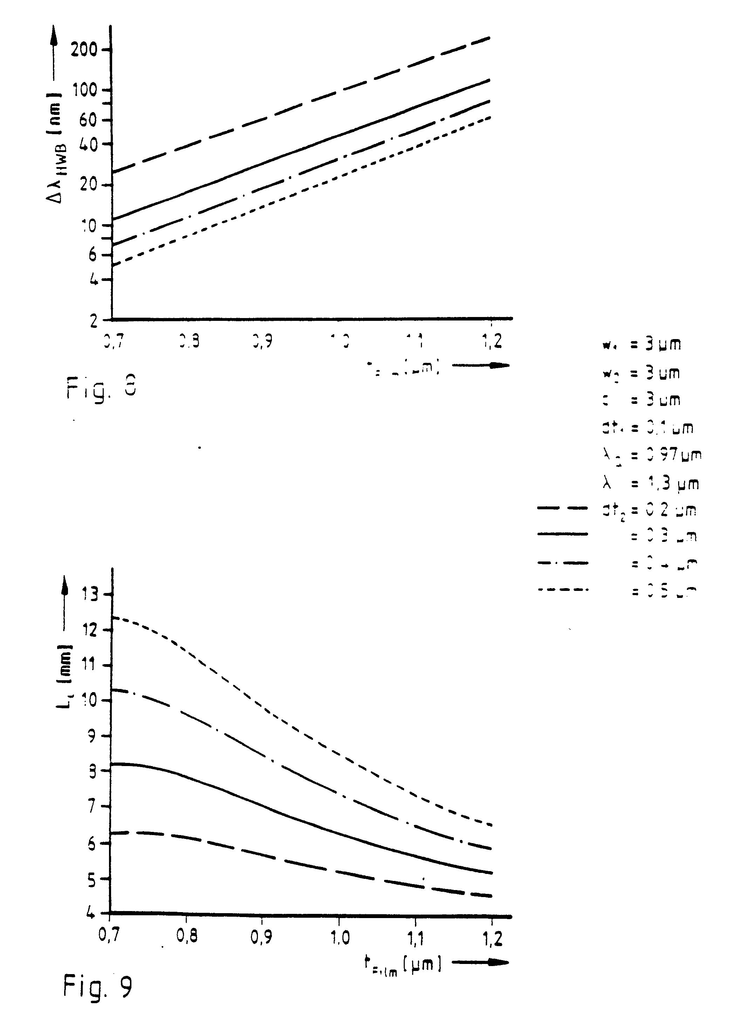

Die Fig. 8 und 9 zeigen zur Dimensionierung von Ausführungsformen der Erfindung den Einfluß einer Änderung $dt_2$ der einen Querschnittsabmessung ($t_2 = t_{Film} + dt_2$, vgl. auch Fig. 5) eines der beiden Wellenleiter. Andererseits kann diesen graphischen Darstellungen ebenfalls entnommen werden, wie in einer MULDEX-Einrichtung für mehrere unterschiedliche Nennwellenlängen bzw. Kanäle die Querschnittsabmessungen dimensioniert sein können.

Für die Erfindung und deren Ausführungsformen ist dabei von wesentlicher Bedeutung, daß die als $\Delta\kappa/2$-Struktur realisierbaren wellenlängenselektiven Filter allein durch unterschiedliche Querschnittsabmessungen der Wellenleiterrippen im selben Material, d.h. insbesondere in nur einer einzigen quaternären Schicht, herstellbar sind. Dabei entstehen die Wellenleiterstrukturen im selben Arbeitsgang. Danach können die Ätzgräben hergestellt werden, d.h. die wellenleitende Schicht ist an den vorgegebenen Stellen, vorzugsweise bis auf das Substrat, wieder zu entfernen. Taper, das sind hier sich bezüglich der Ätztiefe zu den Enden hin verjüngende Ätzgräben, können beispielsweise durch Ätzen mittels schräg auftreffender Ionenstrahlen erzeugt werden. Außerdem können die Periodenlängen (lo und lc) z. B. nach einer Gauß-Verteilung verändert werden.

Der Abstand benachbarter Wellenleiter geht exponentiell in die Koppelkonstante der Anordnung ein. Der Prozeß für die Herstellung der Ätzgräben erfordert also besonders hohe Genauigkeit. Die Einstellung der richtigen Koppellänge kann durch nachträgliche Korrekturen vorgenommen werden, wenn zunächst eine gewisse Überlänge vorgesehen wird und auf dieser z. B. eine Entkopplung durch Wegätzen der Q-Schicht oder eine Auffüllung von Ätzgräben erfolgt. Die Breite der Ätzgräben beträgt ca. 3 µm, ihre geringste Länge etwa 10 µm.

Ein auf einem Substrat mehrere $\Delta\kappa/2$-Filter enthaltender MULDEX kann (vgl. auch Fig. 1) beiderseits eines Durchgangs-Wellenleiters, der alle betreffenden Lichtwellen führt, mit den einmündenden/abzweigenden Satelliten-Wellenleitern aufgebaut werden. Dadurch läßt sich die Baulänge optimal nutzen. Eine für quaternäres Material berechnete $\Delta\kappa/2$-Filterkomponente ist z. B. für die Nennwellenlänge $\lambda o = 1,3$ µm mit N = 59 Sektionen und lo = 85 µm langen Ätzgräben, dementsprechend auch lc = 85 µm, insgesamt ca. 10 mm lang. Dabei beträgt die Durchlaßbreite $\Delta\lambda_{HWB} = 14$ nm. Für optische Übertragungssysteme mit z. B. nur vier einmodigen Lichtwellen-Trägern im Wellenlängenmultiplex für Teilnehmeranschlußleitungen kann der Kanalabstand bis zu 100 nm betragen. Dementsprechend können die $\Delta\kappa/2$-Filter wesentlich breitere Durchlaßbereiche, also weniger Sektionen und damit geringere Baulänge aufweisen.

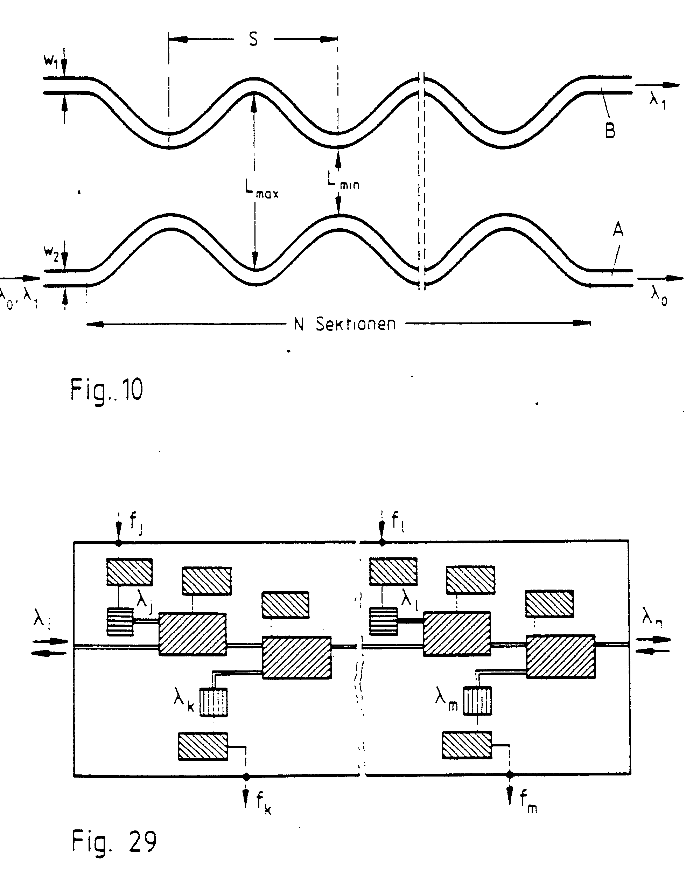

Das in Fig. 10 dargestellte optische Filter enthält zwei schlangenlinienförmig ausgebildete Wellenleiter A, B; die unterschiedlichen Angaben - $W_1$, $W_2$ - sollen auf deren Asymmetrie hinweisen. In Analogie zu den insbesondere in den Fig. 4, 5 und 6 verwendeten Bezeichnungen ist auch hier die Periodenlänge bzw. Sektion S und die Anzahl N der Sektionen zu erkennen. Die diskontinuierliche Verkopplung beider Wellenleiter wird in weiterer Ausgestaltung des Erfindungsgedankens bei dieser Ausführungsform durch periodische Änderung des gegenseitigen Abstandes herbeigeführt. Das bedeutet, mindestens einer der beiden Wellenleiter A, B ist schlangenlinienförmig ausgebildet. Diese Konfiguration ersetzt die zur optischen Isolierung vorgesehenen Ätzgräben G, welche bei der Ausführungsform gemäß Fig. 4 vorgesehen sind, und hat den Vorzug, daß bei der Herstellung keine kritischen Justierungen von Masken erforderlich sind. Soll die Asymmetrie der Wellenleiter durch deren geometrische Abmessungen herbeigeführt werden, kann dies in einem zusätzlichen Ätzvorgang erfolgen, bei dem einer der beiden Wellenleiter durch eine Maske abgedeckt wird.

Die Krümmungen der Schlangenlinien haben z. B. so große Radien oder sind in besonderer Weise derart präpariert, daß dadurch keine Abstrahlungsverluste hervorgerufen werden. Die Abstandsvariation, d.h. die Differenz zwischen Lmax und Lmin, im Bereich von ca. 2 µm bis 3 µm bewirkt eine Änderung der Kopplung um den Faktor 10.

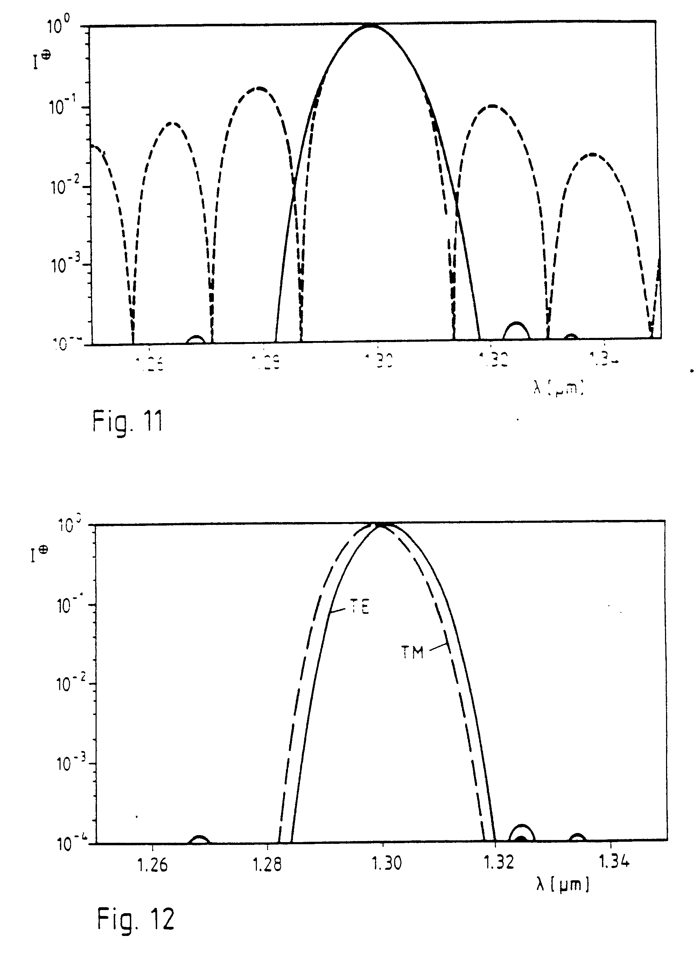

Die in Fig. 11 gezeigten Durchlaßkurven verdeutlichen die Auswirkung einer zusätzlichen Taperung bei Schlangenlinienkonfiguration der Wellenleiter zur Verbesserung der Übersprechdämpfung. Die gestrichelt dargestellte Durchlaßkurve ergibt sich bei einer Konfiguration der Wellenleiter ohne Taperung gemäß Fig. 10; sie weist starke Seitenlappen (side lobes) auf. Diese lassen sich sehr stark unterdrücken - vgl. die durchgezogenen dargestellte Kurve - wenn der Schlangenlinienform der Wellenleiter insgesamt eine weitere schwache Krümmung überlagert wird. Dabei ist eine Schwerpunktlinie der Schlängelung bei einem schlangenlinienförmig ausgebildeten Wellenleiter für sich ebenfalls gekrümmt, und deren Abstand zum anderen Wellenleiter des Paares, bzw. zu dessen Schwerpunktlinie bei ebenfalls schlangenlinienförmiger Ausbildung, verringert sich zum Zentrum und vergrößert sich zu den Randbereichen der Verkopplung. Die Übersprechdämpfung für Kanalabstände von ca. 30 nm oder etwas weniger ist dadurch besser als 30 dB.

Die Fig. 12 zeigt das Ergebnis der in Fig. 11 durchgezogen dargestellten Durchlaßkurve getrennt für den TE- und den TM-Mode einer ausgefilterten Lichtwelle. Die Durchlaßkurven für diese beiden Moden sind sowohl

7

von ihrer Form als auch von ihrer Lage her fast deckungsgleich. Das bedeutet, die Filterung ist modenunabhängig. Erzielbar ist diese, vom Polarisationszustand der Welle unabhängige Filtercharakteristik durch eine weitere konstruktive Maßnahme, nämlich eine durch Bedeckung der Lichtwellen leitenden, z. B. quaternären Schicht mit InP, die in einem Epitaxieschritt aufgebracht wird, nachdem die Wellenleiterstrukturen durch einen Ätzprozeß im Substrat oder auf einer Buffer-Schicht erzeugt worden sind. Die Bedeckung des Lichtwellenleiters mit einem Material, dessen Brechzahl der des Substrats zumindest sehr ähnlich ist, schafft für TE- und TM-Moden gleichwertige Ausbreitungsbedingungen bzw. Verhältnisse, wie sie auch bei Monomode-Fasern mit Kern und Mantel vorliegen.

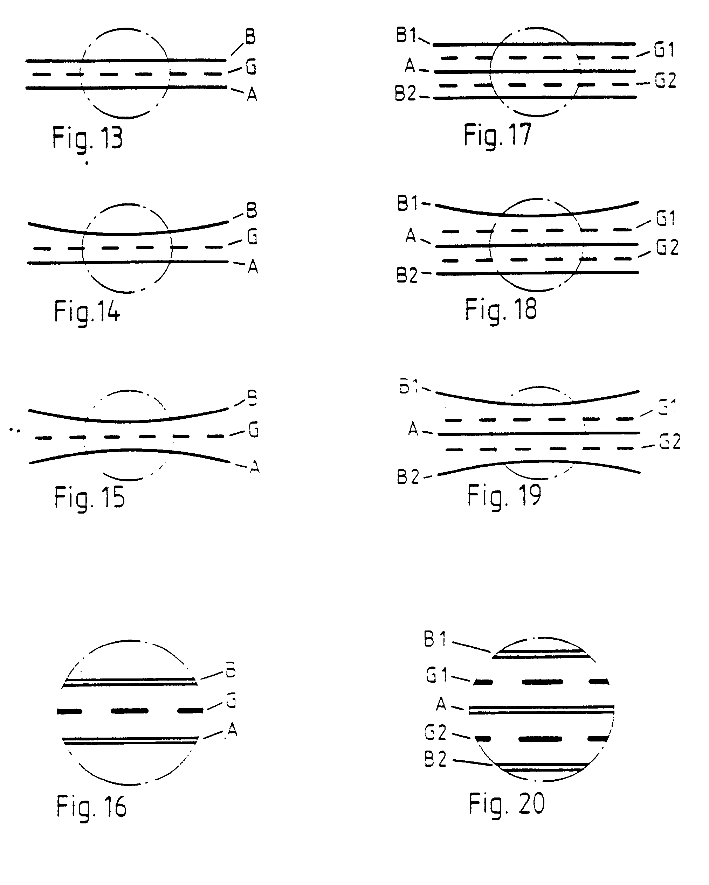

Die in den Fig. 13 bis 28 dargestellten Konfigurationen von wellenlängenselektiven Filtern, insbesondere als Komponenten für MULDEX-Einrichtungen, geben einen Überblick über die Ausgestaltungsmöglichkeiten für Ausführungsformen der Erfindung.

Filterkomponenten gemäß Fig. 13, 14 und 15 weisen jeweils ein Paar von Wellenleitern A, B auf. Zwischen diesen sind Ätzgräben G vorgesehen. Im Kopplungsbereich können die Wellenleiter A, B beide gerade sein (Fig. 13); einer, z. B. der Wellenleiter B, kann gekrümmt sein (Fig. 14) und auch beide Wellenleiter A, B können gekrümmt sein (Fig. 15). Die Krümmung bewirkt eine Taperung der Kopplung und damit eine Verbesserung der Übersprechdämpfung. Fig. 16 zeigt als Detailvergrößerung die in Fig. 13, 14 und 15 eingekreist angegebenen Bereiche.

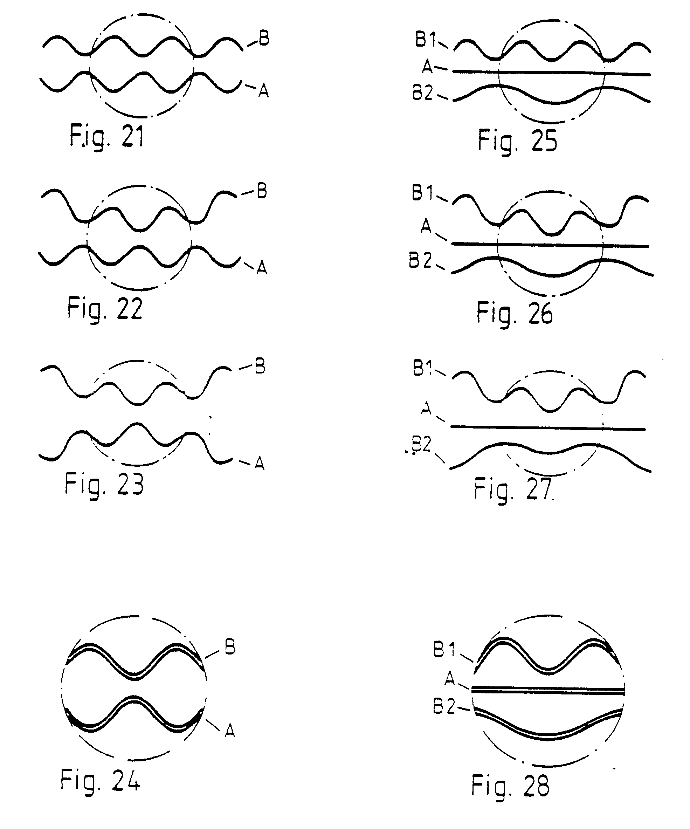

Die in den Fig. 17, 18 und 19 gezeigten Konfigurationen sowie die dazugehörige Detailvergrößerung gemäß Fig. 20 weisen jeweils zwei Paare von Wellenleitern auf, insbesondere mit einem gemeinsamen Wellenleiter A für jedes Paar A, B1; A, B2. Die Ätzgräben G1, G2 eines jeden Paares haben unterschiedliche Periodenlängen. Jedes Paar ist also auf eine andere Wellenlänge abgestimmt. Der gemeinsame Wellenleiter A ist geradlinig ausgebildet. Die anderen Wellenleiter B1, B2 können beide gerade sein (Fig. 17), einer von diesen, z. B. B2 kann gekrümmt sein (Fig. 18), oder auch beide sind gekrümmt (Fig. 19). Hiervon unterscheiden sich die Konfigurationen gemäß Fig. 21, 22 und 23 mit der zugehörigen Detailvergrößerung in Fig. 24 bzw. die der Fig. 25, 26 und 27 mit zugehöriger Detailvergrößerung gemäß Fig. 28 dadurch, daß die diskontinuierliche Kopplung bei diesen Ausführungsformen mittels schlangenlinienförmiger Ausbildung mindestens eines der Wellenleiter A, B, B1, B2 eines Paares herbeigeführt wird. Die Schlangenlinienform ersetzt also Ätzgräben zur diskontinuierlichen Kopplung zwischen Wellenleitern eines Paares. Eine Taperung der Kopplung wird auch hierbei durch eine Änderung des mittleren Abstandes zwischen den Wellenleitern A, B; A, B1; A, B2 eines Paares herbeigeführt. Dabei ist der mittlere Abstand im Zentrum des Koppelbereichs am geringsten und vergrößert sich zu beiden Enden hin.

Fig. 29 zeigt schematisch einen MULDEX als ein Bauelement der integrierten Optik mit monolithischer Integration von optischen und elektrischen Komponenten bzw. deren Mischformen. Die Wellenleiter sind rein optische Komponenten und durch Doppelstriche dargestellt. Die optischen, gegebenenfalls elektrisch steuerbaren Filter sind mit 45°-Schraffur von rechts oben nach links unten versehen, elektrische Schaltkreise, z. B. Verstärker- oder Steuerschaltungen mit 45°-Schraffur von links oben nach rechts unten; opto-elektrische Wandler, z. B. Detektor-Dioden sind mit senkrechter, elektro-optische Wandler, z. B. Laser, mit waagerechter Schraffur dargestellt; elektrische Verbindungsleitungen, wobei hier auf solche zur Spannungsversorgung verzichtet wurde, sind als einfache Striche eingezeichnet.

Ein solches Bauelement wird aus III-V-Material hergestellt, welches einerseits halbleitend ist, also den Aufbau integrierter elektrischer Schaltungen und von Lasern und Photodioden ermöglicht, und andererseits für gewünschte Wellenlängenbereiche $\lambda$ zwischen 0,8 und 1,6 $\mu$m optisch hoch transparent ist. Die optischen Komponenten sind mit ihren monomodalen Ein- bzw. Ausgängen ohne weiteres kompatibel mit optischen Komponenten, die aus einem anderen Material, z. B. LiNbO$_3$ hergestellt sind. Selbstverständlich können herkömmliche elektrische Schaltkreise auf Si-Basis in hybride Aufbauten einbezogen werden.

## Patentansprüche

1. Multiplexer/Demultiplexer - MULDEX - für optische Übertragungssysteme mit Mehrfachausnutzung des Wellenlängenbereichs für Kanäle mit einmodigen Träger-Lichtwellen, wobei zur Ein- und Auskopplung in planarer Technologie aufgebaute optische Filter vorgesehen sind, die nicht identische Wellenleiter mit kodirektionaler ortsabhängiger Kopplung aufweisen,

gekennzeichnet durch

Filterkomponenten, bei denen ungleich ausgebildete Wellenleiter (A, B) über N (N = ganze Zahl) sich periodisch wiederholende Sektionen (S), bestehend aus Koppelstrecken (lc) und die optische Kopplung reduzierende Strecken (lo), diskontinuierlich miteinander verkoppelt sind, und - entsprechend den wellenleitenden Eigenschaften der beiden Wellenleiter (A, B) - für eine vorgegebene Nennwellenlänge ($\lambda$o) die Periodenlänge (lc + lo) der Sektion (S) und für eine vorgegebene Durchlaßbreite ($\Delta\lambda_{HWB}$) des Filters die Anzahl (N) der Sektionen (S) bestimmbar sind.

2. MULDEX nach Anspruch 1, dadurch gekennzeichnet, daß jede der Filterkomponenten aus mindestens einem Paar von Wellenleitern (A, B; A, B1; A, B2) besteht, und Strecken (lo) mit reduzierter optischer Kopplung zwischen den jeweiligen Wellenleitern (A, B; A, B1; A, B2) eines Paares als Ätzgräben (G) ausgebildet sind.

3. MULDEX nach Anspruch 2, dadurch gekennzeichnet, daß die Tiefe (t) der Ätzgräben (G) sich über die gesamte Dicke der wellenleitenden Schicht erstreckt.

4. MULDEX nach Anspruch 2, dadurch gekennzeichnet, daß die Tiefe (t) der Ätzgräben (G) zu den Enden des Kopplungsbereiches hin abnimmt.

5. MULDEX nach Anspruch 1, 3 oder 4, dadurch gekennzeichnet, daß weiterhin bei mindestens einem Paar von Wellenleitern (A, B; A, B1; A, B2) einer der Wellenleiter (A, B; A, B1; A, B2) mit einer Krümmung ausgebildet ist und zum Zentrum der Verkopplung hin den geringsten Abstand zum anderen Wellenleiter des Paares aufweist.

6. MULDEX nach Anspruch 1, dadurch gekennzeichnet, daß jede der Filterkomponenten aus mindestens einem Paar von Wellenleitern (A, B; A, B1; A, B2) besteht, und mindestens einer der Wellenleiter (A, B, B1, B2) schlangenlinienförmig ausgebildet ist, so daß die Koppelstrecken (lc) im Bereich des geringeren gegenseitigen Abstandes ($L_{min}$) und die Strecken (lo) mit weitestgehend reduzierter optischer Kopplung im Bereich des größeren gegenseitigen Abstandes ($L_{max}$) liegen.

7. MULDEX nach Anspruch 6, dadurch gekennzeichnet, daß weiterhin mindestens einer der schlangenlinienförmig ausgebildeten Wellenleiter (A, B, B1, B2) eine gekrümmte Schwerpunktlinie aufweist, die zum Zentrum der Verkopplung hin ihren geringsten Abstand gegenüber dem anderen Wellenleiter bzw. dessen gekrümmter Schwerpunktlinie besitzt.

8. MULDEX nach einem der Ansprüche 1 bis 7,
gekennzeichnet durch
eine Ausbildung der Filterstrukturen in Glas als Substratmaterial.

9. MULDEX nach Anspruch 8,
gekennzeichnet durch
eine Deckschicht über den Filterstrukturen, die aus einem Glasmaterial besteht, dessen optische Brechzahl der des Substratmaterials entspricht.

10. MULDEX nach einem der Ansprüche 1 bis 7,
gekennzeichnet durch
eine Ausbildung der Filterstrukturen in elektro-optischem, dielektrischem Material, insbesondere Lithiumniobat ($LiNbO_3$) oder Lithiumtantalat ($LiTaO_3$).

11. MULDEX nach einem der Ansprüche 1 bis 7,
gekennzeichnet durch
elektro-optisches, dielektrisches Material, insbesondere Lithiumniobat ($LiNbO_3$) oder Lithiumtantalat ($LiTaO_3$), für die Ausbildung der Filterstrukturen sowie für eine Deckschicht über den Filterstrukturen.

12. MULDEX nach einem der Ansprüche 1 bis 7,
gekennzeichnet durch
eine Ausbildung der Filterstrukturen in III-V-Halbleitermaterial, insbesondere Mischkristallmaterial der Zusammensetzungen Galliumaluminiumarsenid/Galliumarsenid (GaAlAs/GaAs) oder Indiumgalliumarsenidphosphid/Indiumphosphid (InGaAsP/InP).

13. MULDEX nach einem der Ansprüche 1 bis 7,
gekennzeichnet durch
III-V-Halbleitermaterial, insbesondere Mischkristallmaterial der Zusammensetzungen Galliumaluminiumarsenid/Galliumarsenid (GaAlAs/GaAs) oder Indiumgalliumarsenidphosphid/Indiumphosphid (InGaAsP/InP) für die Ausbildung der Filterstrukturen sowie für eine Deckschicht über den Filterstrukturen.

14. MULDEX nach einem der Ansprüche 10 bis 13,
gekennzeichnet durch
Elektroden (E), die über gekoppelten Wellenleitern (A, B; A, B1; A, B2) angebracht sind.

15. MULDEX nach einem der Ansprüche 10 bis 13,
gekennzeichnet durch
eine monolithische Integration mehrerer, vorzugsweise aller Filterstrukturen, die an einem Sende- und/oder Empfangsort benötigt werden, als integrierte optische Schaltung (IOC).

16. MULDEX nach einem der Ansprüche 12 oder 13,
gekennzeichnet durch
eine monolithische Integration mehrerer, vorzugsweise aller Filterstrukturen, die an einem Sende- und/oder Empfangsort benötigt werden, einschließlich zugehöriger elektronischer Schaltkreise, als integrierte optisch /elektronische Schaltung (IOEC).

**Claims**

1. Multiplexer/demultiplexer - MULDEX - for optical transmission systems with multiple utilization of the range of wavelengths for channels with monomode carrier lightwaves, optical filters constructed in planar technology being provided for injection and output which exhibit non-identical waveguides with codirectional position-dependent coupling, characterized by filter components in which waveguides (A, B) of unequal construction are discontinuously coupled to one another via N (N = integer) periodically repeating sections (S), consisting of coupling links (lc) and links (lo) reducing the optical coupling, and, for a predetermined nominal wavelength ($\lambda$o), the period length (lc + lo) of the section (S) and, for a predetermined pass band

($\Delta\lambda_{HWB}$) of the filter, the number (N) of sections (S) can be determined in accordance with the wave-guiding characteristics of the two waveguides (A, B).

2. MULDEX according to Claim 1, characterized in that each of the filter components consists of at least one pair of waveguides (A, B; A, B1; A, B2), and links (Io) with reduced optical coupling are formed as etched troughs (G) between the respective waveguides (A, B; A, B1; A, B2) of a pair.

3. MULDEX according to Claim 2, characterized in that the depth (t) of the etched troughs (G) extends over the entire thickness of the wave-guiding layer.

4. MULDEX according to Claim 2, characterized in that the depth (t) of the etched troughs (G) decreases towards the ends of the coupling area.

5. MULDEX according to Claim 1, 3 or 4, characterized in that, furthermore, in at least one pair of wave guides (A, B; A, B1; A, B2), one of the waveguides (A, B; A, B1; A, B2) is constructed with a curvature and exhibits the least spacing from the other waveguide of the pair towards the centre of the coupling.

6. MULDEX according to Claim 1, characterized in that each of the filter components consists of at least one pair of waveguides (A, B; A, B1; A, B2), and at least one of the waveguides (A, B, B1, B2) is constructed in serpentine form so that the coupling links (Ic) are located in the area of the lesser mutual spacing ($L_{min}$) and the links (Io) with the greatest reduced optical coupling are in the area of the greater mutual spacing ($L_{max}$).

7. MULDEX according to Claim 6, characterized in that, furthermore, at least one of the waveguides (A, B, B1, B2) constructed in serpentine form exhibits a curved centre of gravity line which has its smallest distance from the other waveguide or its curved centre of gravity line towards the centre of the coupling.

8. MULDEX according to one of Claims 1 to 7, characterized by a construction of the filter structures in glass as substrate material.

9. MULDEX according to Claim 8, characterized by a cover layer above the filter structures which consists of a glass material the optical index of refraction of which corresponds to that of the substrate material.

10. MULDEX according to one of Claims 1 to 7, characterized by a construction of the filter structures in electro-optical dielectric material, particularly lithium niobate ($LINbO_3$) or lithiun tantalate ($LiTaO_3$).

11. MULDEX according to one of Claims 1 to 7, characterized by electro-optical dielectric material, particularly lithium niobate ($LiNbO_3$) or lithium tantalate ($LiTaO_3$) for constructing the filter structures and for a cover layer above the filter structures.

12. MULDEX according to one of Claims 1 to 7, characterized by a construction of the filter structures in III-V semiconductor material, particularly mixed crystal material of the compositions gallium aluminium arsenide /gallium arsenide (GaAlAs/GaAs) or indium gallium arsenide phosphide/indium phosphide (InGaAsP/InP).

13. MULDEX according to one of Claims 1 to 7, characterized by III-V semiconductor material, particularly mixed crystal material of the compositions gallium aluminium arsenide/gallium arsenide (GaAlAs/GaAs) or indium gallium arsenide phosphide/indium phosphide (InGaAsP/InP) for constructing the filter structures and for a cover layer above the filter structures.

14. MULDEX according to one of Claims 10 to 13, characterized by electrodes (E) which are attached above coupled waveguides (A, B; A, B1; A, B2).

15. MULDEX according to one of Claims 10 to 13, characterized by a monolithic integration of several, preferably all filter structures which are needed at one transmit and/or receive location, as integrated optical circuit (IOC).

16. MULDEX according to one of Claims 12 or 13, characterized by a monolithic integration of several, preferably all filter structures which are needed at one transmit and/or receive location, including associated electronic circuits, as integrated optical/electronic circuit (IOEC).

**Revendications**

1. Multiplexeur/démultiplexeur -MULDEX- pour des systèmes de transmission optique, mettant en oeuvre une utilisation multiple de la gamme des longueurs d'ondes pour des canaux véhiculant des ondes porteuses lumineuses monomode, et dans lequel il est prévu, pour le découplage d'injection et le couplage de sortie, des filtres optiques constitués selon la technologie planar et possédant des guides d'ondes non identiques, dont le couplage s'effectue dans le même sens et dépend de l'emplacement, caractérisé par des composants de filtres, dans lesquels des guides d'ondes (A, B) agencés différemment sont accouplés entre eux de façon discontinue par l'intermédiaire de N (N = nombre entier) sections (S) se répétant périodiquement, constituées par des sections de couplage (Ic) et des sections (Io) réduisant le couplage optique, et, pour une longueur d'onde nominale prédéterminée ($\lambda$o), la longueur (Ic, Io) de la période de la section (S) et, pour une largeur de bande passante prédéterminée ($\Delta\lambda_{HWB}$) du filtre, le nombre (N) des sections (S) peut être déterminé - en fonction des propriétés de guidage des ondes des deux guides d'ondes (A,B).

2. MULDEX suivant la revendication 1, caractérisé par le fait que chacun des composants de filtres est constitué par au moins un couple de guides d'ondes (A, B; A, B1; A, B2), et que des sections (Io) réduisant le couplage optique et présentes entre les guides d'ondes respectifs (A, B; A, B1; A, B2) d'un couple sont réalisés sous la forme de sillons (G) formés par corrosion.

3. MULDEX suivant la revendication 2, caractérisé par le fait que la profondeur (t) des sillons (G) formés par corrosion s'étend sur toute l'épaisseur de la couche guidant les ondes.

10

4. MULDEX suivant la revendication 2, caractérisé par le fait que la profondeur (t) des sillons (G) formés par corrosion diminue en direction des extrémités de la zone de couplage.

5. MULDEX suivant la revendication 1, 3 ou 4, caractérisé par le fait qu'en outre, pour au moins un couple de guides d'ondes (A, B; A, B1; A, B2), l'un des guides d'ondes (A, B; A, B1; A, B2) est réalisé avec une courbure et est séparé de l'autre guide d'ondes du couple, par la distance la plus faible, vers le centre de la zone de couplage.

6. MULDEX suivant la revendication 1, caractérisé par le fait que chacun des composants de filtres est constitué par au moins un couple de guides d'ondes (A, B; A, B1; A, B2), et qu'au moins l'un des guides d'ondes (A, B, B1, B2) est réalisé sous la forme d'une ligne sinueuse de sorte que les sections de couplage (lc) sont situées dans la zone où la distance réciproque est la plus faible ($L_{min}$) et que les sections (lo), au niveau desquelles le couplage optique est le plus fortement réduit, sont situées dans la zone, où la distance réciproque est maximale ($L_{max}$).

7. MULDEX suivant la revendication 6, caractérisé par le fait qu'en outre, au moins l'un des guides d'ondes (A, B, B1, B2), réalisés sous la forme de lignes sinueuses, possède une ligne barycentrique cintrée, dont la distance par rapport à l'autre guide d'ondes ou à la ligne barycentrique cintrée de ce guide d'ondes, est la plus faible, vers le centre de la zone de couplage.

8. MULDEX suivant l'une des revendications 1 à 7, caractérisé par une réalisation des structures des filtres dans du verre utilisé comme matériau formant substrat.

9. MULDEX suivant la revendication 8, caractérisé par une couche de revêtement disposée au-dessus des structures des filtres et constituée par un matériau formé de verre, dont l'indice de réfraction optique correspond à celui du matériau du substrat.

10. MULDEX suivant l'une des revendications 1 à 7, caractérisé par une réalisation des structures des filtres en un matériau diélectrique électro-optique, notamment du niobate de lithium ($LiNbO_3$) ou du tantalate de lithium ($LiTaO_3$).

11. MULDEX suivant l'une des revendications 1 à 7, caractérisé par un matériau diélectrique électro-optique, notamment du niobate de lithium ($LiNbO_3$) ou du tantalate de lithium ($LiTaO_3$), pour la réalisation des structures des filtres ainsi que pour une couche de revêtement disposée au-dessus des structures des filtres.

12. MULDEX suivant l'une des revendications 1 à 7, caractérisé par une réalisation des structures des filtres en un matériau semiconducteur formé d'éléments des groupes III-V, notamment un matériau en forme de cristal mixte possédant les compositions: arseniure de gallium et d'aluminium/arseniure de gallium (GaAlAs /GaAs) ou arseniure-phosphure d'indium et de gallium/phosphure d'indium (InGaAsP/InP).

13. MULDEX suivant l'une des revendications 1 à 7, caractérisé par un matériau semiconducteur formé de composés des groupes III-V, notamment matériau en forme de cristal mixte possédant les compositions: arseniure de gallium et d'aluminium/arseniure de gallium (GaAlAs/GaAs) ou arseniure-phosphure d'indium et de gallium/phosphure d'indium (InGaAsP/InP) pour la réalisation des structures des filtres ainsi que pour une couche de revêtement disposée au-dessus des structures des filtres.

14. MULDEX suivant l'une des revendications 10 à 13, caractérisé par des électrodes (E), qui sont disposées au-dessus de guides d'ondes accouplés (A, B; A, B1; A, B2).

15. MULDEX suivant l'une des revendications 10 à 13, caractérisé par une intégration monolithique de plusieurs et de préférence de toutes les structures des filtres, qui sont nécessaires en un emplacement d'émission et/ou de réception, sous la forme d'un circuit optique intégré (IOC).

16. MULDEX suivant l'une des revendications 12 ou 13, caractérisé par une intégration monolithique de plusieurs et de préférence de toutes les structures de filtres, qui sont nécessaires au niveau d'un emplacement d'émission et/ou de réception, y compris des circuits électroniques associés, sous la forme d'un circuit optique/électronique intégré (IOEC).

Fig. 1

Fig. 2

Fig. 3

Fig. 4

Fig. 5

Fig. 6

Fig. 7

Fig. 8

$w_1$ = 3 μm
$w_2$ = 3 μm
$c$ = 3 μm
$dt_1$ = 0.1 μm
$\lambda_0$ = 0.97 μm
$\lambda$ = 1.3 μm
$dt_2$ = 0.2 μm
= 0.3 μm
= 0.4 μm
= 0.5 μm

Fig. 9

Fig..10

Fig. 29

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27.

Fig. 28